# EUROPEAN PATENT SPECIFICATION

(11) **EP 3 025 694 B1**
(45) Date of publication and mention of the grant of the patent: **02.06.2021**
(21) Application number: 13889977.8
(22) Date of filing: 26.07.2013
(51) Int. Cl.: A61H 3/04, A61G 7/10, B25J 11/00

(54) **HOLDER AND ASSISTING ROBOT**
HALTER UND UNTERSTÜTZENDER ROBOTER
SUPPORT ET ROBOT D'ASSISTANCE

(43) Date of publication of application: 01.06.2016
(73) Proprietor: FUJI Corporation, Chiryu Aichi (JP)
(72) Inventor: NOMURA, Hideaki, Chiryu Aichi (JP); ISOZUMI, Joji, Chiryu Aichi (JP); NAKANE, Nobuyuki, Chiryu Aichi (JP)
(74) Representative: Grünecker Patent- und Rechtsanwälte PartG mbB
(86) International application number: PCT/JP2013/070389
(87) International publication number: WO 2015/011838

(56) References cited:
- WO-A1-2012/090248
- DE-U1- 20 000 380
- JP-A- 2001 029 392
- JP-A- 2004 351 201
- JP-A- 2008 073 501
- JP-A- 2011 019 571
- JP-A- 2011 206 266
- US-A1- 2005 217 024
- US-A1- 2011 083 267

## Description

### Technical Field

The present invention relates to a care robot and a holding tool that holds the body of a care receiver.

### Background Art

As a type of holding tool, a holding tool disclosed in patent literature 1 is known. As shown in fig. 1 of patent literature 1, the holding tool is configured from a front face section 11 (base frame) that contacts the front side of the torso of a care receiver, and side surface sections 12a and 12b (left/right frames) formed along from the upper thorax side to the lower thorax of the care receiver in a manner that narrows. The holding tool is provided with an adjustment section 26, and adjustment section 26 is such that left side surface section 12a and right side surface section 12b are moved by pinion 24 being rotated. According to this, the width of left side surface section 12a and right side surface section 12b can be adjusted to fit the body shape of the care receiver.

Also, as another type of holding tool, a holding tool disclosed in patent literature is known. As shown in figs. 4 to 7 of patent literature 2, the holding tool holds a care receiver by wrapping around the care receiver from under the armpits to a portion of the back of the care receiver using the weight of the care receiver (armpit holding mechanism 29). Armpit holding mechanism 29 is configured from chest supporting base 29A, a pair of arc-shaped guide slits 29B and 29B formed on a circle concentric with an arc that contacts the chest of the care receiver provided in chest section supporting base 29A, a pair of circular guided sections 29C and 29C that engage with guide slits 29B and 29B and which are rotatable within guide slits 29B and 29B, a pair of L-shaped armpit holding arms 29D and 29D that are attached to guided sections 29C and 29C so at to be movable and rotatable on chest section supporting base 29A, spring 29E that connects the pair of guided sections 29C and 29C, and supporting tool 29F that assists movement of armpit holding arms 29D and 29D.

Patent Literature 3 and 4 disclose a holding tool according to the preamble of independent claim 1.

### Citation List

### Patent Literature

Patent Literature 1: JP-A-2011-206266
Patent Literature 2: JP-A-2008-073501
Patent Literature 3: US 2011/083267 A1
Patent Literature 4: DE 200 00 380 U1

### Summary of Invention

### Technical Problem

With the holding tool disclosed in patent literature 1, although the width of left side surface section 12a and right side surface section 12b can be adjusted to fit the body shape of the care receiver, in a case in which pinion 24 has a construction driven manually or by electric power such as a motor, there are the problems that adjustment work is troublesome and the construction is complicated which leads to high costs and a large size.

Also, with the holding tool disclosed in patent literature 2, although problems related to troublesome manual work and high costs and large size due to electric power drive can be curtailed with regard to adjustment of the holding tool to fit the body shape of the care receiver, because the chest of the care receiver is pushed by the inside end of the pair of L-shaped armpit holding arms 29D and 29D, there is a problem in that discomfort in the form of pain in the chest of the care receiver arises due to the counterforce of spring 29E that connects the pair of guided sections 29C and 29C.

In order to solve the above problem, an object of the present invention is to provide a care robot and a holding tool that holds the body of a care receiver without the care receiver feeling discomfort and without giving rise to troublesome work, high costs, or large equipment size.

### Solution to Problem

In order to solve the above problems, the present invention provides a holding tool according to the features of independent claim 1

The scope of the invention is defined by the claims.

### Brief Description of Drawings

[Fig. 1] Fig. 1 is a right side view showing an embodiment of a care robot according to the present invention.
[Fig. 2] Fig. 1 is a plan side view showing an embodiment of a care robot according to the present invention.
[Fig. 3a] Fig. 3a is a right side view showing a scheme of the internal structure of the care robot shown in fig. 1 which is in an extended state.
[Fig. 3b] Fig. 3b is a front view showing the vicinity including a first slide section shown in fig. 3a.
[Fig. 4a] Fig. 4a is a right side view showing a scheme of the internal structure of the care robot shown in fig. 1 which is in a contracted state.
[Fig. 4b] Fig. 4b is an end surface view taken along line 4b-4b shown in Fig. 4a.
[Fig. 4c] Fig. 4c is a front view showing the vicinity including a first slide section shown in fig. 4a.
[Fig. 5] Fig. 5 is a perspective view showing a scheme of the internal structure of the holding section (holding tool) shown in fig. 1.
[Fig. 6] Fig. 6 is a plan view showing a scheme of the internal structure of the holding section (holding tool) shown in fig. 1.
[Fig. 7] Fig. 7 is a front view showing, with respect to the scheme of the internal structure of the holding section (holding tool) shown in fig. 1, the fully open state of the left and right frames when the weight of the care receiver is not being applied.
[Fig. 8] Fig. 8 is a front view showing, with respect to the scheme of the internal structure of the holding section (holding tool) shown in fig. 1, the holding positions of the left and right frames when the weight of the care receiver is being applied.
[Fig. 9] Fig. 9 is a side view illustrating a state in which the care robot is supporting a sitting care receiver.
[Fig. 10] Fig. 10 is a side view illustrating a state in which the care robot is supporting a standing care receiver.
[Fig. 11] Fig. 11 shows a standing up motion on the left, and a sitting down motion on the right.
[Fig. 12] Fig. 12 is a block diagram showing the care robot shown in fig. 1.
[Fig. 13] Fig. 13 is a block diagram showing the control device shown in fig. 12.
[Fig. 14] Fig. 14 is a front view (left half) showing a scheme of the internal configuration of the holding section (holding tool) of a first alternative embodiment configured with a cam mechanism for the holding position adjustment mechanism.
[Fig. 15] Fig. 15 is a front view (left half) showing a scheme of the internal configuration of the holding section (holding tool) of another example of the first alternative embodiment configured with a cam mechanism for the holding position adjustment mechanism.
[Fig. 16] Fig. 16 is a front view (left half) showing a scheme of the internal configuration of the holding section (holding tool) of a second alternative embodiment configured with a link mechanism for the holding position adjustment mechanism.

### Description of Embodiment

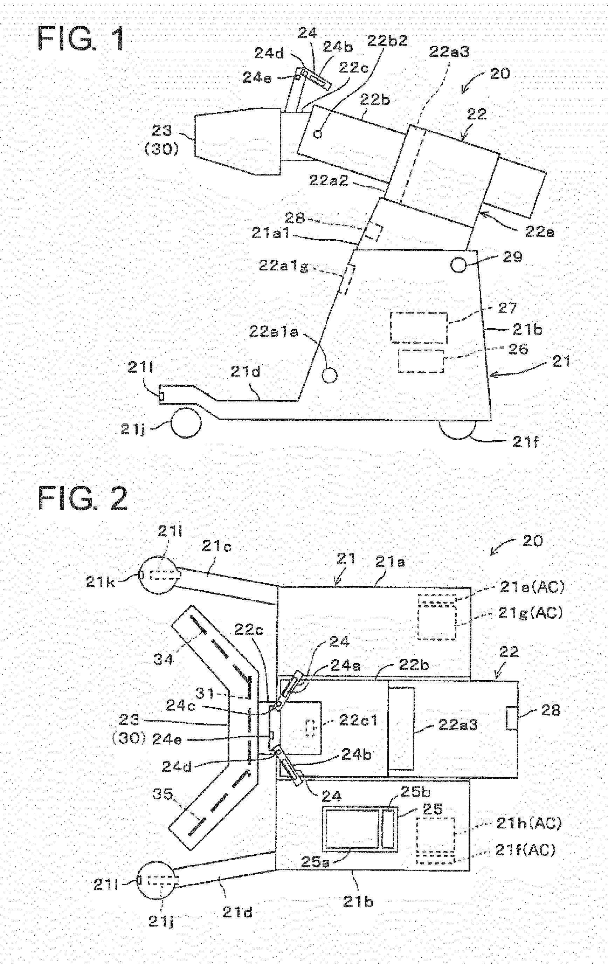

Hereinafter, an embodiment of a care robot and holding tool according to the present invention will be described. Fig. 1 and fig. 2 are respectively a right side view and plan view showing care robot 20.
Care robot 20 is a care robot for assisting the standing up and sitting down of a care receiver M1 by supporting a body part (for example, the upper body, particularly, the chest) of care receiver M1. As shown in figs. 1 and 2, care robot 20 includes base 21, robot arm section 22, holding section 23 (30), handle 24, operation device 25, storage device 26, and control device 27.

Base 21 is provided with left/right base sections 21a and 21b, and left/right leg sections 21c and 21d. Left/right base sections 21a and 21b are provided spaced apart by a specified interval in the left/right direction, and as shown in fig. 2, left/right drive wheels 21e and 21f are respectively provided on left/right base sections 21a and 21b, and left/right drive wheel motors 21g and 21h that respectively drive left/right drive wheels 21e and 21f are internally incorporated in left/right base sections 21a and 21b. Care robot 20 travels using left/right drive wheels 21e and 21f which are respectively driven by left/right drive wheel motors 21g and 21h.
Traveling drive section AC is configured from left/right drive wheels 21e and 21f, and left/right drive wheel motors 21g and 21h. The configuration may be such that the above drive sources provided in base 21 are omitted and care robot 20 is moved by being pushed by care receiver M1.

Left/right leg sections 21c and 21d extend horizontally in a forward direction (left direction in figs. 1 and 2) from left/right base sections 21a and 21b. Left/right driven wheels 21i and 21j are respectively provided on an end section of left/right leg sections 21c and 21d. In addition, a pair of collision prevention sensors 21k and 211 are respectively provided on an end of the left/right leg sections 21c and 21d. Collision prevention sensors 21k and 21l are sensors for detecting an obstacle, and a detection signal thereof is transmitted to control device 27.

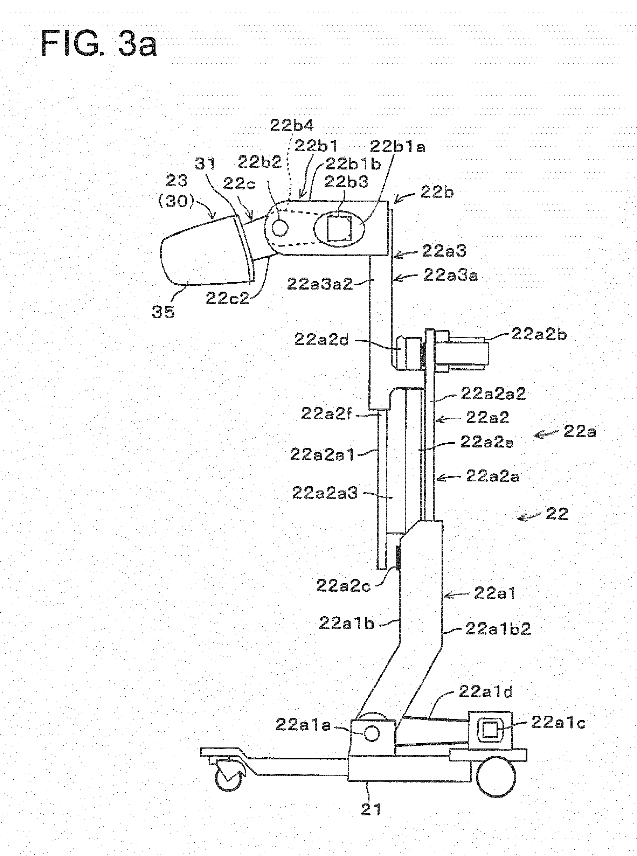

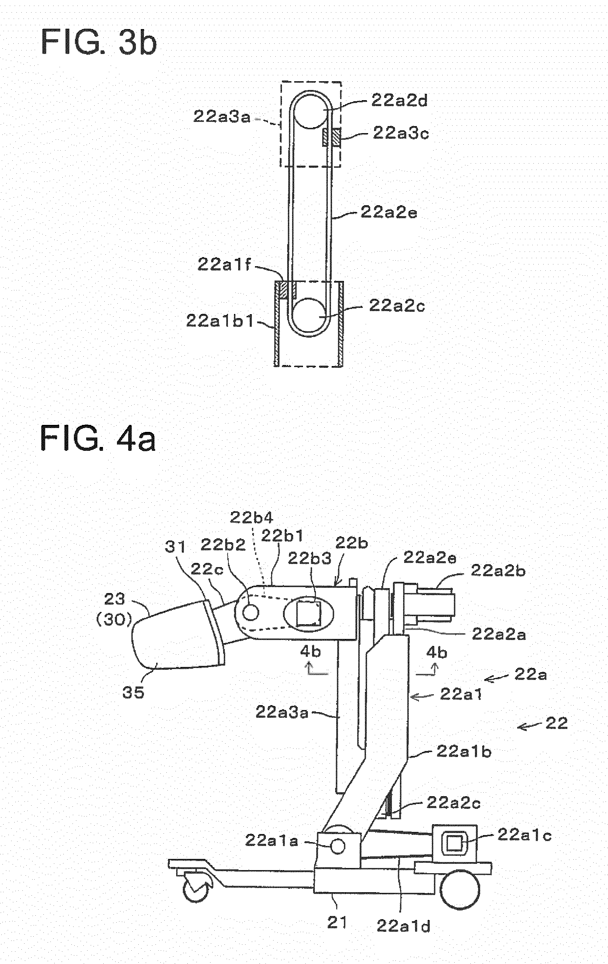

A base section of robot arm section 22 is attached to the base 21 and, as shown in figs. 3a and 4a, robot arm section 22 is provided with multiple arms 22a, 22b, and 22c which are relatively movable by using a drive section configured to mainly include first and second rotation motors 22alc and 22b3 and a slide motor 22a2b. Robot arm section 22 may be configured from multiple axes. Axes in this case may include at least one of a rotation axis and a slide axis.

As shown in figs. 3a and 3b, and figs. 4a to 4c, a base section of first arm 22a is attached to base 21. First arm 22a is provided with slide base section 22a1, first slide section 22a2, and second slide section 22a3.

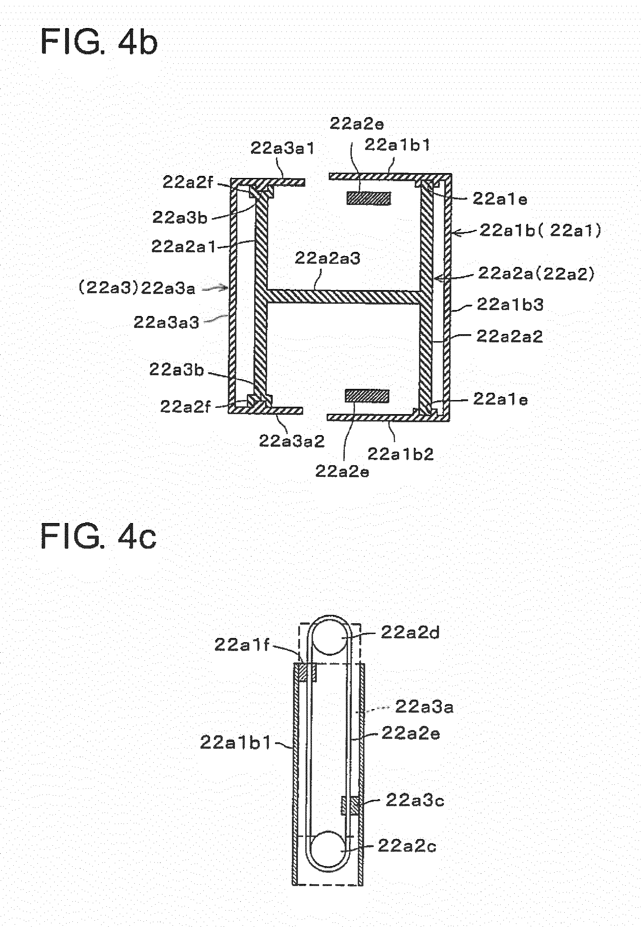

As shown in figs. 1 and 2, slide base section 22a1 is formed in a substantially rectangular cuboid shape. As shown in fig. 3a, the base end section of slide base section 22a1 is provided mainly with frame 22a1b which is attached to base 21 so as to be rotatable around first rotation axis 22ala. Frame 22a1b is formed with a substantially U-shaped cross section, and as shown in fig. 4b, is configured mainly from left/right plate members 22a1b1 and 22a1b2 which are formed bent, and a rear plate member 22alb3 whose left and right ends are connected to the upper rear ends of the left/right plate members 22a1b1 and 22a1b2.

As shown in fig. 3a, first rotation motor 22a1c is provided on base 21. First drive belt 22a1d is mounted around a pulley of first rotation motor 22a1c and a pulley of first rotation axis 22ala. When first rotation motor 22a1c is driven, frame 22alb, that is slide base section 22a1, is rotated around first rotation axis 22a1a in a forward direction or backward direction.

As shown in fig. 4b, a left/right guide groove 22a1e that slidably engages with the left/right end of rear plate member 22a2a2 of frame 22a2a of first slide section 22a2 which is described below is formed on the inside of frame 22a1b (on the inside of left/right plate member 22a1b1 and 22alb2). Fixed section 22alf that is attached to and fixes slide belt 22a2e which is described below is provided on an upper section of left plate member 22a1b1 of frame 22a1b (refer to figs. 3b and 4c).

As shown in fig. 1, slide base section 22a1 is provided with knee sensor 22a1g. Knee sensor 22a1g is provided facing forwards from the front of slide base section 22a1 (the left direction is the front direction in figs. 1 and 2), and is provided at a position roughly equal to the knee height of care receiver M1 sitting on the seat. Knee sensor 22alg is a distance detecting sensor that detects the distance to a knee of care receiver M1. A detection signal of knee sensor 22a1g is sent to control device 27. Note that knee sensor 22a1g is, for example, a laser type, LED type, or ultrasonic type sensor.

As shown in figs. 1 and 2, first slide section 22a2 is formed in a substantially rectangular cuboid shape and is configured to be smaller than slide base section 22a1. First slide section 22a2 slides in a lengthwise direction (axis movement direction) with respect to slide base section 22al, and is configured to be substantially housed inside slide base section 22a1 when contracted.

Specifically, first slide section 22a2 is provided with frame 22a2a (refer to fig. 3a). As shown in fig. 4b, frame 22a2a is formed in an H-shape in cross section and an H-shape in a side view, and is configured from front/rear plate members 22a2a1 and 22a2a2 and a connection plate member 22a2a3 whose front/rear ends are connected to a central portion in the vertical direction of front/rear plate members 22a2a1 and 22a2a2. Both the left and right ends of rear plate member 22a2a2 are slidably engaged with left/right guide groove 22a1e of frame 22a1b. As shown in fig. 3a, mainly slide motor 22a2b is provided on an upper section of rear plate member 22a2a2. Pulley 22a2c is rotatably provided on a lower section of rear plate member 22a2a2. Slide belt 22a2e is mounted around a pulley 22a2c and a pulley 22a2d of slide motor 22a2b.

As shown in fig. 4b, guide rail 22a2f is provided in both the left and right end sections of the front plate member 22a2a1 of frame 22a2a. Guide rail 22a2f slidably engages with left/right guide receiving section 22a3b on the inside of the left/right plate members of frame 22a3a of second slide section 22a3 which is described below.

As shown in figs. 1 and 2, second slide section 22a3 is formed in a substantially rectangular cuboid shape and is configured to be smaller than first slide section 22a2. Second slide section 22a3 slides in a lengthwise direction (axis movement direction) with respect to first slide section 22a2, and is configured to be substantially housed inside first slide section 22a2 when contracted.

Specifically, second slide section 22a3 is provided with frame 22a3a (refer to fig. 3a). As shown in fig. 4b, frame 22a3a is formed substantially in an H-shape in cross section and is configured from left/right plate members 22a3a1 and 22a3a2 and a front/rear plate member 22a3a3 whose left/right ends are connected to the front end section of left/right plate members 22a3a1 and 22a3a2. Left/right guide receiving section 22a3b that slidably engages with guide rail 22a2f of frame 22a2a is provided on the inside of frame 22a3a (the inner wall of left/right plate members 22a3a1 and 22a3a2). Fixed section 22a3c that is attached to and fixes slide belt 22a2e is provided on a lower section of right plate member 22a3a2 of frame 22a3a (refer to figs. 3b and 4c).

If slide motor 22a2b is driven, frame 22a2a of first slide section 22a2 extends in the axis movement direction with respect to frame 22a1b of slide base section 22a1 (the extended state shown in figs. 3a and 3b). At the same time, frame 22a3a of second slide section 22a3 extends with respect to frame 22a2a of first slide section 22a2 (the extended state shown in figs. 3a and 3b).

Conversely, if slide motor 22a2b is driven in the reverse direction, frame 22a2a of first slide section 22a2 contracts in the axis movement direction with respect to frame 22a1b of slide base section 22a1 (the contracted state shown in figs. 4a and 4c). At the same time, frame 22a3a of second slide section 22a3 contracts with respect to frame 22a2a of first slide section 22a2 (the contracted state shown in figs. 4a and 4c).

As shown in figs. 1 and 2, second arm 22b is formed in a substantially rectangular cuboid shape and is formed in an end section of second slide section 22a3 extending in a direction (forward direction) that is perpendicular to the lengthwise direction. Specifically, as shown in fig. 3a, second arm 22b is mainly provided with frame 22b1 configured from left/right plate members 22bla and 22b1b. The rear end of left/right plate members 22b1a and 22b1b of frame 22b1 are respectively fixedly connected to an upper section of left/right plate members 22a3a1 and 22a3a2 of frame 22a3a.

Second rotation axis 22b2 is rotatably provided on an end section of left/right plate members 22b1a and 22blb of frame 22b1. Second rotation motor 22b3 is provided on a center section of left/right plate members 22bla and 22blb. Second rotation drive belt 22b4 is mounted around a pulley of second rotation motor 22b3 and a pulley of second rotation axis 22b2.

Third arm 22c is formed in a substantially rectangular cuboid shape and the base section thereof is attached to an end section of second arm 22b so as to be rotatable around second rotation axis 22b2. Specifically, third arm 22c is provided with frame 22c2. The rear end section of frame 22c2 is fixed so as to be rotated as one with second rotation axis 22b2. The front end section of frame 22c2 is fixed to the rear end of holding section 23.
If second rotation motor 22b3 is driven, frame 22c2, that is, third arm 22c, rotates around second rotation axis 22b2 in an upward direction or a downward direction.

Holding section 23 is fixed to an end of third arm 22c. Holding section 23 is a holding tool that holds the body (for example, the upper body, particularly, the chest) of care receiver M1. Holding section 23 assists the standing up and sitting down of care receiver M1 by supporting a body part (for example, the upper body, particularly, the chest) of care receiver M1. For example, holding section 23 is a member that supports both arms (both armpits) of care receiver M1 from below when working opposite care receiver M1 during standing up motion and sitting down motion, and is formed in a U-shape which is open in the forward direction in a plan view. The surface of holding section 23 is covered, for example, by a relatively soft material on the assumption that holding section 23 contacts care receiver M1.

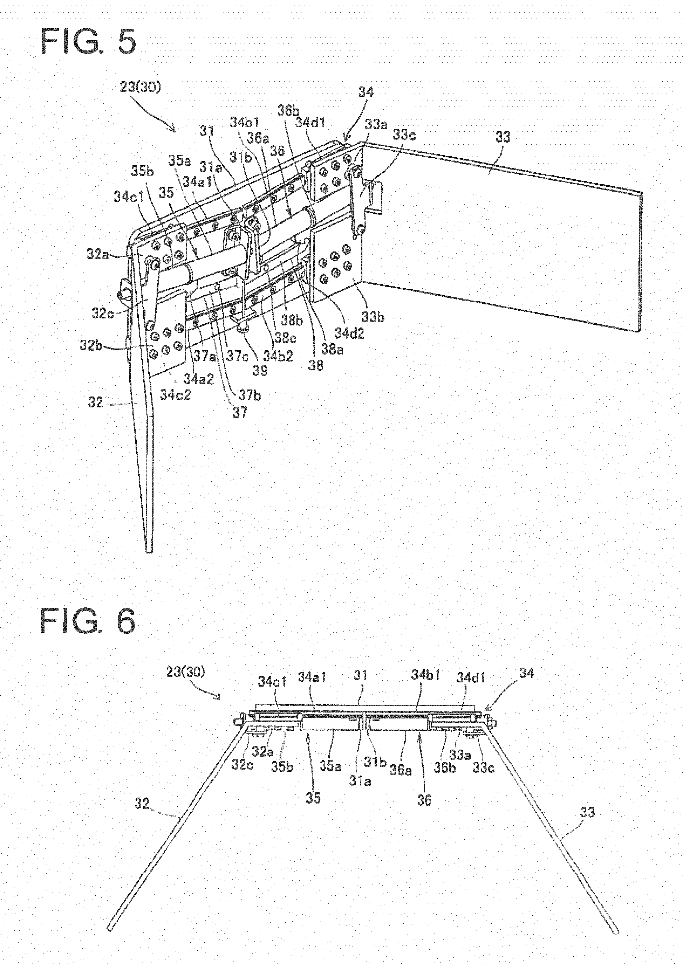

As shown in figs. 5 to 8, holding section 23 (30) is provided with base frame 31, left and right frames 32 and 33, and holding position adjustment mechanism 34. Base frame 31 is formed in a rectangular shape and the rear surface of base frame 31 is fixed to the front end of frame 22c2 of third arm 22c (refer to fig. 3a). Left and right frames 32 and 33 are attached to left and right sections of base frame 31 so as to be capable of relative movement in left and right directions, and hold the body of care receiver M1 by sandwiching the body of care receiver M1 from the left and right. Left and right frames 32 and 33 are each formed in a rectangular shape and are provided to extend facing forwards.

When the weight of care receiver M1 is applied downwards on left and right frames 32 and 33, holding position adjustment mechanism 34 adjusts the holding position of left and right frames 32 and 33 by moving left and right frames 32 and 33 which are being pushed downwards by the weight of care receiver M1 towards a center section of base frame 31 and positioning left and right frames 32 and 33 by left and right frames 32 and 33 contacting the body of care receiver M1. Note that the holding position is the position at which left and right frames 32 and 33 hold the body of care receiver M1.

Specifically, holding position adjustment mechanism 34 is provided with a pair of left guide rails 34a1 and 34a2, and a pair of right guide rails 34b1 and 34b2, which are each fixed to base frame 31, a pair of left sliders 34c1 and 34c2 that are respectively guided by the pair of left guide rails 34a1 and 34a2, and a pair of right sliders 34d1 and 34d2 that are respectively guided by the pair of right guide rails 34b1 and 34b2. The pair of left guide rails 34a1 and 34a2 are arranged parallel to each other, and each extend slanted downwards from the left end of base frame 31 to the center section. The pair of right guide rails 34b1 and 34b2 are arranged parallel to each other, and each extend slanted downwards from the right end of base frame 31 to the center section. Note that, left and right guide rails may be configured from a single rail instead of a pair (two).

The rear surfaces of the pair of left sliders 34c1 and 34c2 respectively slidably engage with the pair of left guide rails 34a1 and 34a2. A pair of fixing sections 32a and 32b of left frame 32 are respectively fixed to the front surface of the pair of left sliders 34c1 and 34c2 by being screwed. The pair of fixing sections 32a and 32b of left frame 32 extend from the inside edge of left frame 32 at a specified angle.

The rear surfaces of the pair of right sliders 34d1 and 34d2 respectively slidably engage with the pair of right guide rails 34b1 and 34b2. A pair of fixing sections 33a and 33b of right frame 33 are respectively fixed to the front surface of the pair of right sliders 34d1 and 34d2 by being screwed. The pair of fixing sections 33a and 33b of right frame 33 extend from the inside edge of right frame 33 at a specified angle.

Holding section 23 is provided with left and right biasing devices 35 and 36. Left and right biasing devices 35 and 36 respectively bias left and right frames 32 and 33 against the pushing force pushing left and right frames 32 and 33 towards the center section of base frame 31. Left biasing device 35 is provided with outer cylinder 35a formed from a bottomed cylinder, inner cylinder 35b formed from a bottomed cylinder which is slidably inserted inside outer cylinder 35a, and a biasing member (in the present embodiment, for example, a coil spring that is not shown) that is provided in a space formed between outer cylinder 35a and inner cylinder 35b and that exerts a force which separates outer cylinder 35a and inner cylinder 35b along the axis direction thereof. Similarly to left biasing device 35, right biasing device 36 is provided with outer cylinder 36a, inner cylinder 36b, and a biasing member (in the present embodiment, for example, a coil spring that is not shown).

The bottom section of outer cylinder 35a of left biasing device 35 is fixed to fixing section 31a that is fixed to the center section of base frame 31; the bottom section of inner cylinder 35b of left biasing device 35 is fixed to fixing section 32c that is fixed to the inside fixing edge of left frame 32. The bottom section of outer cylinder 36a of right biasing device 36 is fixed to fixing section 31b that is fixed to the center section of base frame 31; the bottom section of inner cylinder 36b of right biasing device 36 is fixed to fixing section 33c that is fixed to the inside fixing edge of right frame 33.

Holding section 23 is provided with left and right ratchet mechanisms 37 and 38. Left ratchet mechanism 37 is provided with left ratchet teeth 37a and left ratchet lever 37b. Left ratchet teeth 37a are fixed to the rear surface of fixing section 32b of left frame 32, and the row of teeth is provided along the direction in which left guide rail 34a1 (or 34a2) extends. Left ratchet teeth 37a move together with left frame 32. Left ratchet lever 37b is formed in a rod shape and is rotatably attached to base frame 31 via fixing pin 37c. A hook that engages in a separable manner with the row of left ratchet teeth 37a is provided on an end of left ratchet lever 37b. The hook and row of teeth engage so as to allow movement of left frame 32 towards the center section of base frame 31 and to restrict movement towards the left of base frame 31. An end of left ratchet lever 37b is biased by a biasing member (for example a spring which is not shown) in a direction in which the hook engages with the row of teeth. Release lever 39 is connected to the other end of left ratchet lever 37b.

Right ratchet mechanism 38 is provided with right ratchet teeth 38a and right ratchet lever 38b. Right ratchet teeth 38a are fixed to the rear surface of fixing section 33b of left frame 33, and the row of teeth is provided along the direction in which right guide rail 34b1 (or 34b2) extends. Right ratchet teeth 38a move together with right frame 33. Right ratchet lever 38b is formed in a rod shape and is rotatably attached to base frame 31 via fixing pin 38c. A hook that engages in a separable manner with the row of right ratchet teeth 38a is provided on an end of left ratchet lever 38b. The hook and row of teeth engage so as to allow movement of right frame 33 towards the center section of base frame 31 and to restrict movement towards the right of base frame 31. An end of right ratchet lever 38b is biased by a biasing member (for example a spring which is not shown) in a direction in which the hook engages with the row of teeth. Release lever 39 is connected to the other end of right ratchet lever 38b.

According to this kind of configuration, when the weight of care receiver M1 is applied on left and right frames 32 and 33, left and right sliders 34c1 and 34d1 which are under downward pushing pressure due to the weight of care receiver M1 are lowered along left and right guide rails 34a1 and 34b1 due to the component of that pushing pressure acting along the left and right guide rails 34a1 and 34b1. By this, left and right frames 32 and 33 each move towards the center section of base frame 31. And, the holding position of left and right frames 32 and 33 is automatically adjusted by left and right frames 32 and 33 being positioned by respectively contacting the body of care receiver M1.

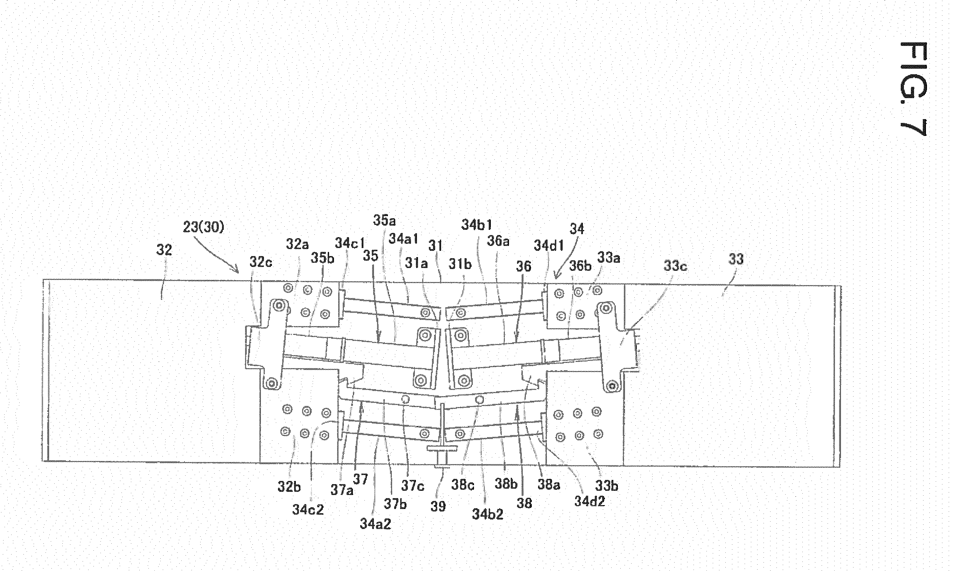

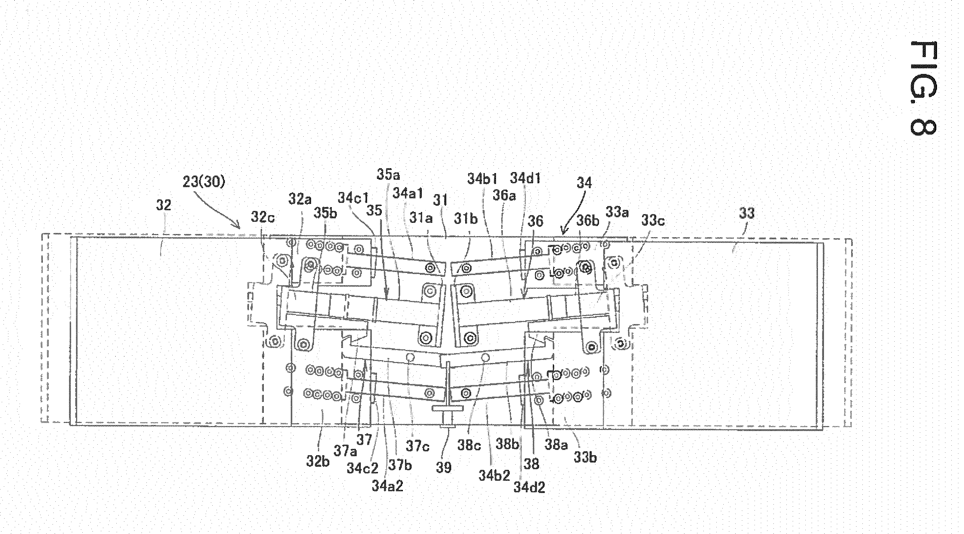

Note that, fig. 7 shows the fully open state of left and right frames 32 and 33 when the weight of care receiver M1 is not being applied; fig. 8 shows the holding positions of left and right frames 32 and 33 when the weight of care receiver M1 is being applied. At this time, left and right frames 32 and 33 are positioned lower compared to the fully open state. Note that, in fig. 8, the positions of left and right frames 32 and 33 during the fully open state are shown by dashed lines.

Further, left and right ratchet mechanisms 37 and 38 restrict the movement direction of left and right frames 32 and 33 on in the direction of the center section of base frame 31. Also, when the holding positions of left and right frames 32 and 33 are decided, left and right ratchet mechanisms 37 and 38 respectively fix the holding positions of left and right frames 32 and 33 in a releasable manner by the respective engagement of left and right ratchet teeth 37a and 38a with the hooks of left and right ratchet levers 37b and 38b. Further, the respective engagement of left and right ratchet teeth 37a and 38a with the hooks of left and right ratchet levers 37b and 38b is released by pushing release lever 39 upwards against the biasing force.

As shown in figs. 1 and 2, handle 24 is fixed to the upper surface of third arm 22c. Handle 24 is configured from a pair of left and right rod-shaped handgrips, and is provided such that the handgrips are to be gripped by the left and right hands of care receiver M1. Contact sensors 24a and 24b for detecting the gripping are provided in handle 24. Leftward turning switch 24c for turning the care robot 20 to the left and rightward turning switch 24d for turning the care robot 20 to the right are provided in handle 24. Furthermore, stop switch 24e for stopping the care robot 20 is provided in handle 24.

In addition, in a case where care receiver M1 walks in a state being supported by holding section 23, or in a case where care receiver M1 walks in a state gripping handle 24, load sensor 22c1 for detecting the force received from care receiver M1 is provided in third arm 22c. Load sensor 22c1 is a sensor for detecting as a voltage change the distortion amount of a distortion generating body which changes according to a load change, or a semiconductor-type pressure sensor in which gauge resistance is changed and converted into an electrical signal according to the distortion which arises when pressure is applied to a silicon chip.

Operation device 25 is provided with display unit 25a that displays images and operation section 25b that receives input operations from an operator (a caregiver or care receiver M1).
Display section 25a is configured from a liquid crystal display, and displays a selection screen for operation modes of care robot 20 and so on. A standing up motion assistance mode for assisting a standing up motion of care receiver M1, a sitting down motion assistance mode for assisting a sitting motion care receiver M1, and so on, are set as operation modes.

Operation section 25b is provided with a cursor key for moving a cursor up/down/left/right, a cancel key for canceling inputs, and a determination key for determining selected content; the configuration is such that operator instructions can be entered using the keys. Operation unit 25 may be configured from a touch panel that has the display function of display section 25a and the input function of operation section 25b such that the device is operated by pressing the display on the touch panel.

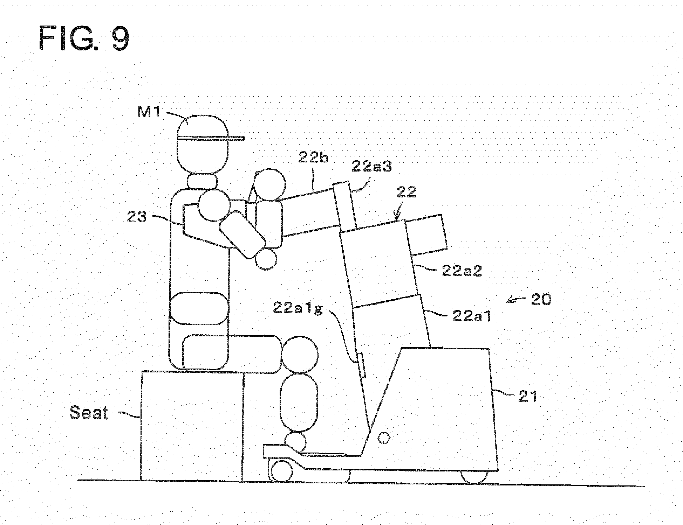

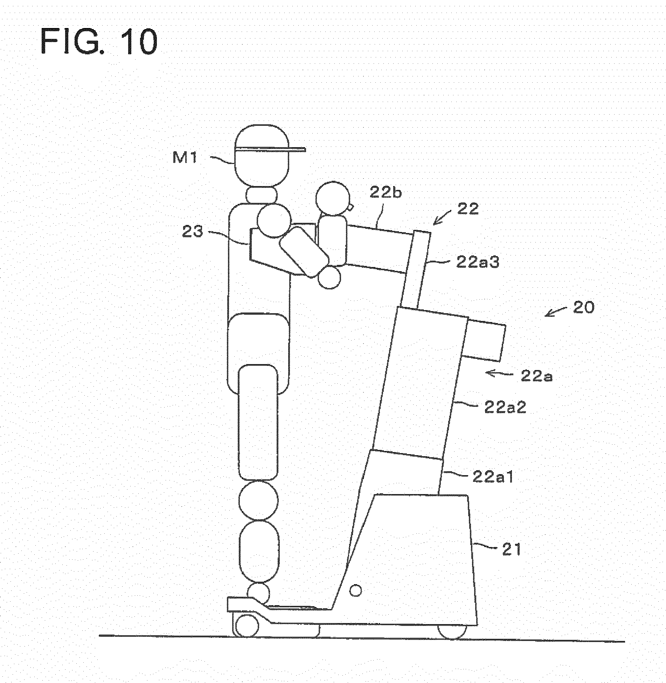

Storage device 26 (storage section) stores: standing up trajectory reference data that indicates a standing up trajectory Tas1 along which a movement control position, for example shoulder position Ps, of care receiver M1 passes when a sitting care receiver M1 (refer to fig. 9) who is supported by holding section 23 stands up; and sitting down trajectory reference data that indicates a sitting down trajectory Tbs1, which is different from the standing up trajectory Tas1, along which shoulder position Ps of care receiver M1 passes when a standing care receiver M1 (refer to fig. 10) who is supported by holding section 23 sits down.

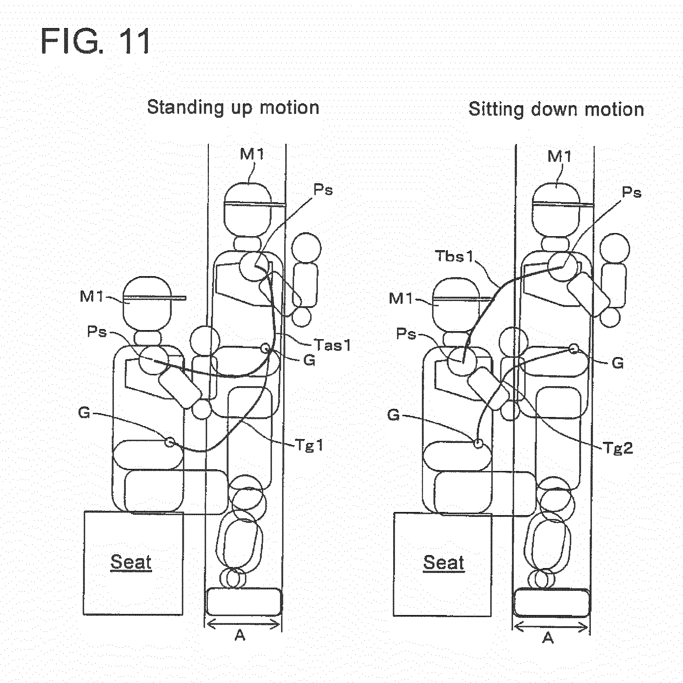

Standing up trajectory Tas1 and sitting down trajectory Tbs1 may be created by capturing images of actual standing up motion and creating the trajectories based on two-dimensional coordinates (for example, xy coordinates) of the shoulder position Ps. Standing up trajectory Tas1 is shown in fig. 11 (left side). Standing up trajectory Tas1 is based on the standing up trajectory reference data. Sitting down trajectory Tbs1 is shown in fig. 11 (right side). Sitting down trajectory Tbs1 is based on the sitting down trajectory reference data. Note that, the standing up trajectory and the sitting down trajectory may be created by simulation.

As shown in fig. 11, standing up trajectory Tas1 is set such that center of gravity G of care receiver M1 is within range A of the soles of both feet of care receiver M1 between a point in time early after the start of standing up motion which is motion to stand up care receiver M1 and an end time point of the standing up motion of care receiver M1. Tg1 represents the trajectory of center of gravity G.

As shown in fig. 11, sitting trajectory Tbs1 is set such that center of gravity G of care receiver M1 is outside range A of the soles of both feet from a point in time early after the start of sitting down motion which is motion to sit down care receiver M1, and moves toward a planned sitting position of the care receiver M1. Sitting trajectory Tbs1 is set such that sitting trajectory Tbs1 is positioned above standing up trajectory Tas1. Tg2 represents the trajectory of the center of gravity G.

Further, storage device 26 stores a correction amount based on the width of the held section (for example, the upper body, in particular, the chest) of care receiver M1, that is the lowering amount of holding section 23. This correction amount is a value for correcting each of the above data. Each of the above data is data when the width of the held section is a specified value (for example, 25 cm). The smaller the width, the larger the correction value is set.

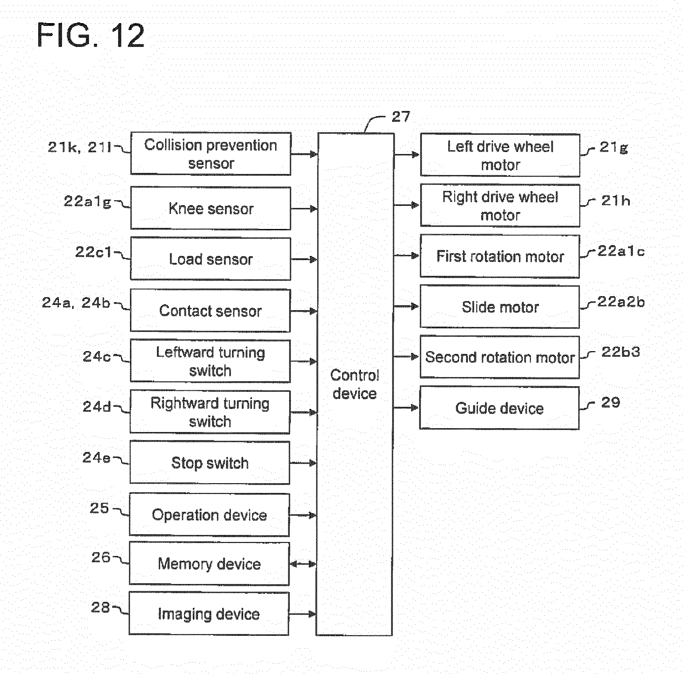

Control device 27 performs control related to traveling and posture changing of the care robot 20. As shown in fig. 12, the above collision prevention sensors 21k and 211, knee sensor 22a1g, load sensor 22c1, contact sensors 24a and 24b, leftward turning switch 24c, rightward turning switch 24d, stop switch 24e, left/right drive wheel motors 21g and 21h, first rotation motor 22a1c, slide motor 22a2b, second rotation motor 22b3, operation device 25, storage device 26, imaging device 28, and guide device 29 are connected to control device 27. Also, control device 27 has a microcomputer (not shown); the microcomputer is provided with an input/output interface, CPU, RAM, and ROM (all not shown) that are connected to one another via a bus.

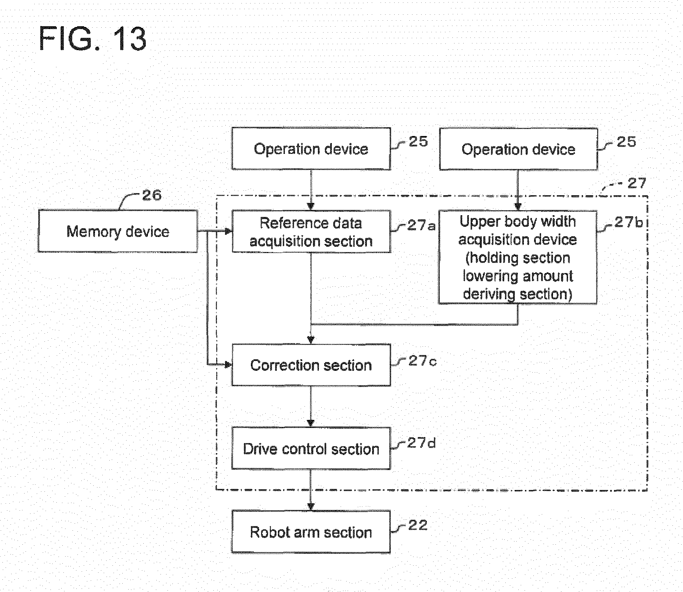

As shown in fig. 13, control device 27 is provided with reference data acquisition section 27a, upper body width acquisition section 27b, correction section 27c, and drive control section 27d. Reference data acquisition section 27a acquires an operation mode (any one of a standing up motion assistance mode, a sitting down motion assistance mode, a motion series assistance mode) selected using operation device 25, and acquires reference data according to the acquired mode from storage device 26. Standing up trajectory reference data is acquired when in standing up motion assistance mode, sitting down trajectory reference data is acquired when in sitting down motion assistance mode, and standing up trajectory reference data and sitting down trajectory reference data are acquired when in motion series assistance mode.

Upper body width acquisition section 27b acquires the width of the upper body (width of the chest) of care receiver M1 selected by operation device 25. Note that, upper body width acquisition section 27b (holding section lowering amount deriving section) derives the lowering amount (holding section lowering amount) of left and right frames 32 and 33 of holding section 23 from the upper body width. Also, upper body width acquisition section 27b may be configured to acquire the lowering amount from a detection sensor that detects the lowering amount of left and right frames 32 and 33 provided on holding section 23.

Correction section 27c corrects the data acquired by reference data acquisition section 27a according to the upper body width (that is, the lowering amount of holding section 23) acquired by the upper body width acquisition section 27b. Specifically, correction section 27c acquires the correction amount according to the acquired upper body width from storage device 26. It is desirable that the correction amount is set to a value such that the standing up trajectory final point is at coordinates lowered by the lowering amount of holding section 23. Correction section 27c corrects the data acquired by reference data acquisition section 27a based on each acquired correction amount.

Drive control section 27d drives the drive section configured to include first and second rotation motors 22a1c and 22b3, and slide motor 22a2b, so as to drive the standing up motion of robot arm section 22 based on the standing up trajectory reference data or the corrected standing up trajectory reference data. Also, drive control section 27d drives the drive section, so as to drive the sitting down motion of robot arm section 22 based on the sitting down trajectory reference data or the corrected sitting down trajectory reference data. Specifically, drive control section 27d acquires reference data corrected by correction section 27c (including reference data that has not been corrected) from correction section 27c. Then, drive control section 27d drives the drive section in accordance with the acquired reference data.
Also, control device 27 (drive control section 27d) adjusts the standing up trajectory and the sitting down trajectory of robot arm section 22 in accordance with the upper body width of care receiver M1.

Imaging device 28 is provided respectively on the front surface of slide base section 22a1 and the rear surface of first slide section 22a2. Imaging device 28 provided on the front surface of slide base section 22a1 images a target in front of care robot 20. Imaging device 28 provided on the rear surface of first slide section 22a2 images a target behind or above care robot 20.

Guide device 29 provides guidance to people, including care receiver M1 and a caregiver, in the vicinity regarding the state of care robot 20 using sound or a display. Guide device 29 may be a speaker for outputting sound, or a display device such as an LCD or an LED for displaying characters or graphics and the like.

Next, the operation of care robot 20 configured as given above will be described. First, a case will be described in which care robot 20 comes close to a sitting care receiver M1. At this time, care robot 20 is, for example, approaching care receiver M1 who is sat on a bed. Care robot 20 advances with the front surface of care robot 20 facing in the traveling direction. Care robot 20 reads a guiding mark provided in the vicinity of care receiver M1 using imaging device 28 in the front surface of care robot 20, and approaches care receiver M1 based on the information. Care robot 20 uses a detection result (distance between care robot 20 and a knee of care receiver M1) of knee sensor 22a1g, and moves to a specified position where the distance from sitting care receiver M1 becomes specified distance Xc1. The specified position is the optimum position for standing up care receiver M1 (standing up optimum position).

Then, care robot 20 gives the guidance "Grip the handle" to care receiver M1. If care receiver M1 grips both handles, the fact that handle 24 has been gripped is detected by contact sensors 24a and 24b, thus care robot 20 performs standing up motion for allowing the care receiver M1 to stand up.

If a standing up motion starts, care robot 20 holds the upper body of sitting care receiver M1 using holding section 23 (refer to fig. 9). At this time, when the weight of care receiver M1 is applied on left and right frames 32 and 33 of holding section 23, left and right sliders 34c1 and 34d1 which are under downward pushing pressure due to the weight of care receiver M1 are lowered along left and right guide rails 34a1 and 34b1 due to the component of that pushing pressure acting along the left and right guide rails 34a1 and 34b1. By this, left and right frames 32 and 33 each move towards the center section of base frame 31. And, the holding position of left and right frames 32 and 33 is automatically adjusted by left and right frames 32 and 33 being positioned by respectively contacting the body of care receiver M1.

Then, while holding the upper body of care receiver M1, care robot 20 stands the care receiver M1 up (refer to fig. 10). More specifically, as shown on the left in fig. 11, the standing up motion is performed along reference standing up trajectory Tas1. During standing up motion, as given above, standing up trajectory reference data is corrected based on the foot position of care receiver M1 sitting on the seat, and standing up motion is performed along the standing up trajectory based on the corrected standing up trajectory reference data.

Care robot 20 assists care receiver M1 in a standing up state. Care receiver M1 moves by walking in a state supported by holding section 23 supporting the arms of care receiver M1 from below. Care robot 20 advances with the rear surface of care robot 20 facing in the traveling direction.

And, if a sitting down operation for sitting care receiver M1 down starts, care robot 20 brings care receiver M1 in a standing up state (refer to fig. 10) into a sitting down state while the upper body of care receiver M1 is held by the holding section 23 (refer to fig. 9). More specifically, as shown on the right in fig. 11, the sitting down motion is performed along the sitting down trajectory.

Then, when the sitting down motion ends, care robot 20 gives the guidance "Let go of the handle" to care receiver M1. If care receiver M1 lets go of handle 24, contact sensors 24a and 24b detect the fact that the hands have let go of handle 24, thus, care robot 20 moves away from care receiver M1.

Holding section 23 (holding tool) of the present embodiment is a holding tool that holds the body of a care receiver, which comprises: base frame 31; left and right frames 32 and 33, which are attached to left and right sections of base frame 31 so as to be relatively movable in left and right directions, that support the body of care receiver M1 by sandwiching the body from the left and right; and holding position adjustment mechanism 34 that, when the body weight of care receiver M1 is applied downwards onto left and right frames 32 and 33, adjusts the holding position of left and right frames 32 and 33 by moving each of left and right frames 32 and 33 which are being pushed downwards by the weight of care receiver M1 towards a center section of base frame 31 and positioning left and right frames 32 and 33 by left and right frames 32 and 33 contacting the body of care receiver M1.

According to this, care receiver M1 can be held in a state with their body sandwiched between left and right frames 32 and 33 under both arms, in which case, when the weight of care receiver M1 is applied to left and right frames 32 and 33, the holding position of left and right frames 32 and 33 is adjusted by left and right frames 32 and 33 being moved towards a center section of base frame 31 and left and right frames 32 and 33 being positioned by left and right frames 32 and 33 contacting the body of care receiver M1. Accordingly, when care receiver M1 is held by holding section 23, discomfort felt by care receiver M1 such as pain in the chest can be curtailed compared to conventional technology. Thus, holding section 23 holds the body of care receiver M1 without care receiver M1 feeling discomfort and without giving rise to troublesome work, high costs, or large equipment size.

Also, for holding section 23 of the present embodiment, holding position adjustment mechanism 34 is provided with: left and right guide rails 34a1 and 34a2 and guide rails 34b1 and 34b2 that are fixed to base frame 31, each extend slanted downwards from the left and right ends of base frame 31 to the center section, and respectively guide left and right frames 32 and 33; and left and right sliders 34c1 and 34c2 and sliders 34d1 and 34d2 that are respectively guided by the left and right guide rails 34a1 and 34a2 and guide rails 34b1 and 34b2, and respectively fixed to an inside end of left and right frames 32 and 33. According to this, when the weight of care receiver M1 is applied to left and right frames 32 and 33, because left and right frames 32 and 33 are each moved reliably towards the center section of base frame 31, left and right frames 32 and 33 are moved reliably with a simple configuration.

Also, with holding section 23 of the present embodiment, further provided are: left and right biasing devices 35 and 36 that respectively bias left and right frames 32 and 33 against the pushing force pushing left and right frames 32 and 33 towards the center section of base frame 31; and left and right ratchet mechanisms 37 and 38 that control the movement direction of left and right frames 32 and 33 only in the center section direction of base frame 31, and that respectively fix left and right frames 32 and 33 in a releasable manner at the holding position when left and right frames 32 and 33 have been positioned at the holding position.
According to this, the position of left and right frames 32 and 33 that have provisionally been positioned can be reliably fixed by left and right ratchet mechanisms 37 and 38.

Also, care robot 20 of the present embodiment is provided with the above holding section 23. According to this, care robot 20 has the functionality and effects of holding section 23 describe above.

Also, care robot 20 of the present embodiment is a care robot provided with holding section 23 that assists care receiver M1 to stand up and sit down by supporting a part (the chest) of the body of care receiver M1, the robot further comprising: base 21; robot arm section 22 that is provided on base 21 and includes multiple arms 22a, 22b, and 22c that are relatively movable to each other by using a drive section; holding section 23 that is provided on an end of robot arm section 22 and that supports care receiver M1; storage device 26 (storage section) that stores standing up trajectory reference data which indicates standing up trajectory Tas1 along which movement control portion Ps of care receiver M1 passes when care receiver M1 sitting on a seat stands up being supported by holding section 23, and sitting down trajectory reference data which indicates sitting down trajectory, which is different from standing up trajectory Tas1, along which movement control position Ps of care receiver M1 passes when standing care receiver M1 supported by holding section 23 sits down; and drive control section 27d that drives the drive section so as to drive robot arm section 22 based on the standing up trajectory reference data and the sitting down trajectory reference data.

According to this, because it is easy to set standing up trajectory reference data as data corresponding to the standing up trajectory of a healthy person, in a case in which care receiver M1 is stood up such that movement control portion Ps (for example, a shoulder position) of care receiver M1 passes along standing up trajectory Tas1, robot arm section 22 can be driven based on standing up trajectory reference data corresponding to the standing up trajectory of a healthy person. Accordingly, care receiver M1 is assisted to stand up with the same feeling as when care receiver M1 stands up without assistance. Thus, care receiver M1 is stood up without discomfort.

In contrast, typically, a sitting down trajectory of a healthy person is different from a standing up trajectory of a healthy person; however, because it is easy to set sitting down trajectory reference data as data corresponding to the sitting trajectory of a healthy person, in a case in which care receiver M1 is seated such that movement control portion Ps of care receiver M1 passes along sitting down trajectory Tbs1, robot arm section 22 can be driven based on sitting down trajectory reference data corresponding to the sitting down trajectory of a healthy person. Accordingly, care receiver M1 is assisted to sit down with the same feeling as when care receiver M1 sits down without assistance. Thus, care receiver M1 is sat down without discomfort.

Also, further provided is correction section 27c that corrects standing up trajectory reference data and sitting down trajectory reference data based on the width of the upper body of care receiver M1, and drive control device 27d drives the drive section such that robot arm section 22 is driven based on the standing up trajectory reference data and sitting down trajectory reference data corrected by correction section 27c. By this, care receiver M1 is stood up and sat down according to an appropriate standing up trajectory or sitting down trajectory even if the width of the upper body of care receiver M1 differs. Standing up trajectory final point has coordinates lowered by the lowering amount of holding section 23.

First alternative embodiment of the holding position adjustment mechanism In the above embodiment, holding position adjustment mechanism 34 is provided with a pair of left guide rails 34a1 and 34a2, and a pair of right guide rails 34b1 and 34b2, a pair of left sliders 34c1 and 34c2, and a pair of right sliders 34d1 and 34d2; however, holding position adjustment mechanism 134 may be configured from a cam mechanism.

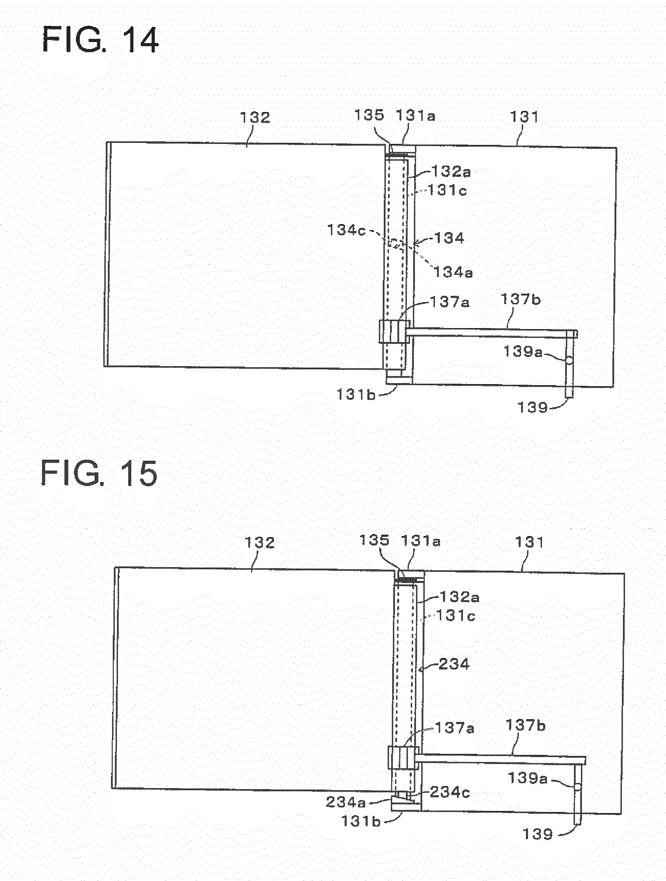

Specifically, as shown in fig. 14, holding position adjustment mechanism 134 is provided with left/right cams 134a respectively formed on the left/right sections of base frame 131, and left/right contacting sections 134c that are respectively formed on the attachment side of left/right frames 132 and move while respectively contacting each of the cam surfaces of left/right cams 134a; each cam surface of left/right cams 134a is formed so as to each move towards the central section of base frame 131 as left/right frames 132 move down. Note that, as the right half corresponds to the left half, descriptions thereof are omitted.

Support sections 131a and 131b are formed on the left end up/down section of base frame 131. Support sections 131a and 131b are fixed in a non-rotatable manner to the up/down end of left shaft 131c. Left cam 134a which is a left cam groove is formed on an outer surface of left shaft 131c. Cylindrical section 132a that externally engages in a non-rotatable manner with left shaft 131c is provided on the inside end (attachment side) of left frame 132. Left contacting section 134c, which is an engaging protrusion that moves while contacting the inner wall surface (cam surface) of left cam groove 134a, is provided on an inner surface of cylindrical section 132a. The entire length of cylindrical section 132a of left frame 132 is set to be shorter than the entire length of left shaft 131c. Cylindrical section 132a and left frame 132 move up/down while rotating with respect to left shaft 131c.

According to this kind of configuration, when the weight of care receiver M1 is applied on left/right frames 132, left/right frames 132 which are under downward pushing pressure due to the weight of care receiver M1 are lowered along the inner surface of left cam groove 134a due to the component of that pushing pressure acting along left cam groove 134a. By this, left/right frames 132 each move towards the center section of base frame 131. And, the holding position of left/right frames 132 is automatically adjusted by left/right frames 132 being positioned by respectively contacting the body of care receiver M1.
In this way, when the weight of care receiver M1 is applied to left/right frames 132, because left/right frames 132 are each moved reliably towards the center section of base frame 131, left/right frames 132 are moved reliably with a simple configuration.

Also, with the first alternative embodiment, holding section 23 is further provided with: left/right biasing devices 35 and 36 that respectively bias left/right frames 132 against the pushing force pushing left/right frames 132 towards the center section of base frame 131; and left/right ratchet mechanisms 137 that control the movement direction of left/right frames 132 only in the center section direction of base frame 131, and that respectively fix left/right frames 132 in a releasable manner at the holding position when left/right frames 132 have been positioned at the holding position.

Left biasing device 135 is configured from a torsion coil spring, the coil section thereof is inserted into left shaft 131c, an end thereof is locked into base frame 131, and the other end thereof is locked into left frame 132. Left biasing device 135 is biased such that left frame 132 expands out. Left ratchet mechanism 137 is provided with gear ratchet teeth 137a, and left ratchet lever 137b one end of which is provided with a hook that releasably engages with gear ratchet teeth 137a and the other end of which is connected to an end of release lever 139. Release lever 139 is rotatably fixed to base frame 131 by fixing pin 139a. The engagement of left ratchet tooth 137a and the hook of left ratchet lever 137b is released by pushing release lever 139 to the left against the biasing force.

Note that, in the above alternative embodiment, left/right cams 134a are respectively formed in the left/right sections of base frame 131, and left/right contacting sections 134c are respectively formed on the attachment side of left/right frames 132 and configured to move while respectively contacting each of the cam surfaces of left/right cams 134a; however, the left/right cams may be respectively provided on the attachment side of the left/right frames, and the left/right contacting sections may be respectively formed on the left/right sections of the base frame.

Further described with reference to fig. 15 is another alternative embodiment of holding position adjustment mechanism 134 configured from a cam mechanism. In the above alternative embodiment, left cams 134a which are a cam groove are provided on an out surface of left shaft 131c, and engaging protrusions which are left/right contacting sections 134c are provided on the inner surface of cylindrical section 132a. In contrast, in this other alternative embodiment, left cams 234a which are a cylindrical cam are provided on support section 131b that fixes the lower end of left shaft 131c, and left/right contacting sections 234c which are engaging protrusions protrude at the lower end of cylindrical section 132a. Engaging protrusions (left/right contacting sections 234c) that move while respectively contacting each inclined surface of left/right cams 234a are respectively provided on the attachment side of left/right frames 132, and each cam surface of left/right cams 234a is formed so as to each move towards the central section of base frame 131 as left/right frames 132 move down.

According to this kind of configuration, when the weight of care receiver M1 is applied on left/right frames 132, left/right frames 132 which are under downward pushing pressure due to the weight of care receiver M1 are lowered along the inclined surface of left cylindrical cam 234a due to the component of that pushing pressure acting along the inclined surface (cam surface) of left cylindrical cam 234a.

Second alternative embodiment of the holding position adjustment mechanism In the above embodiment, holding position adjustment mechanism 34 is provided with a pair of left guide rails 34a1 and 34a2, and a pair of right guide rails 34b1 and 34b2, a pair of left sliders 34c1 and 34c2, and a pair of right sliders 34d1 and 34d2; however, holding position adjustment mechanism 334 may be configured from a link mechanism.

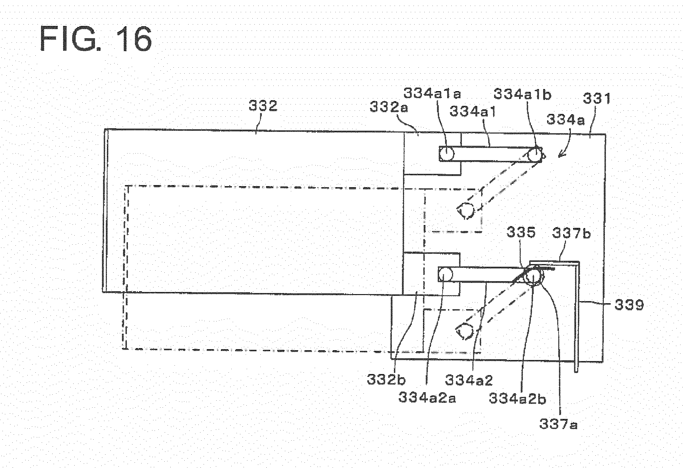

Specifically, as shown in fig. 16, holding position adjustment mechanism 334 is provided with left/right link mechanisms 334a, which are formed from multiple links 334a1 and 334a2, and an end of each thereof is up/down movably attached to left/right frame 332, and the other end thereof is attached to base frame 331; left/right link mechanisms 334a are configured so as to each move towards the central section of base frame 331 as left/right frames 332 move down. Note that, as the right half corresponds to the left half, descriptions thereof are omitted.

An end of link 334a1 is rotatably attached to fixing section 332a of left frame 332 via fixing pin 334ala. An end of link 334a2 is rotatably attached to fixing section 332b of left frame 332 via fixing pin 334a2a. The pair of fixing sections 332a and 332b of left frame 332 extend from the inside edge of left frame 332 at a specified angle. The other end of link 334a1 is rotatably attached to base frame 331 via fixing pin 334alb. The other end of link 334a2 is rotatably attached to base frame 331 via fixing pin 334a2b.

According to this kind of configuration, when the weight of care receiver M1 is applied on left/right frames 332, left/right frames 332 which are under downward pushing pressure due to the weight of care receiver M1 are lowered around fixing pins 334alb and 334a2b of links 334a1 and 334a2 (shown by the dashed-dotted line in fig. 16). By this, left/right frames 332 each move towards the center section of base frame 331. And, the holding position of left/right frames 332 is automatically adjusted by left/right frames 332 being positioned by respectively contacting the body of care receiver M1.
In this way, when the weight of care receiver M1 is applied to left/right frames 332, because left/right frames 332 are each moved reliably towards the center section of base frame 331, left/right frames 332 are moved reliably with a simple configuration.

Also, with the second alternative embodiment, holding section 23 is further provided with: left/right biasing devices 35 and 36 that respectively bias left/right frames 332 against the pushing force pushing left/right frames 332 towards the center section of base frame 331; and left/right ratchet mechanisms 337 that control the movement direction of left/right frames 332 only in the direction of the center section of base frame 331, and that respectively fix left/right frames 332 in a releasable manner at the holding position when left/right frames 332 have been positioned at the holding position.

Left biasing device 335 is configured from a torsion coil spring, the coil section thereof is inserted into fixing pin 334a2b, an end thereof is locked into base frame 331, and the other end thereof is locked into link 334a2. Left biasing device 335 is biased such that link 334a2 is biased in a clockwise direction. Left ratchet mechanism 337 is provided with gear ratchet teeth 337a which are fixed to other side of link 334a2, and left ratchet lever 337b one end of which is provided with a hook that releasably engages with gear ratchet teeth 337a and the other end of which is connected to an end of release lever 339. The engagement of left ratchet tooth 337a and the hook of left ratchet lever 337b is released by pushing release lever 339 up against the biasing force.

20: care robot; 21: base; 21g, 21h: left/right drive wheel motor (drive source); 22: robot arm section; 22a: first arm; 22a1c: first rotation motor (drive section); 22a2b: slide motor (drive section); 22b: second arm; 22b3: second rotation motor (drive section); 22c: third arm; 23, 30: holding section (holding tool); 31: base frame; 32, 33: left/right frames; 34: holding position adjustment mechanism; 34a1, 34a2, and 34b1, 34b2: left/guide rails; 34c1, 34c2, and 34d1, 34d2: left/right sliders; 35, 36: left/right biasing devices; 37, 38: left/right ratchet mechanisms; 24: handle; 25: operation device; 26: storage device (storage section); 27: control device; 27a: reference data acquisition section; 27b: upper body width acquisition section; 27c: correction section; 27d: drive control section; 28: imaging device; 29: guide device; M1: care receiver

## Claims

1. A holding tool (23) that is configured to hold the body of a care receiver (M1), the holding tool (23) comprising:
a base frame (31);
left and right frames (32, 33), which are attached to left and right sections of the base frame (31) so as to be relatively movable in left and right directions, and which are provided to extend facing forwards, and that are configured to support the body of the care receiver (M1) by sandwiching the body from the left and right; and
a holding position adjustment mechanism (34) that, when the body weight of the care receiver (M1) is applied downwards onto the left and right frames (32, 33), is configured to adjust the holding position of the left and right frames (32, 33) by moving each of the left and right frames (32, 33) which are being pushed downwards by the weight of the care receiver (M1) towards a center section of the base frame (31) and positioning the left and right frames (32, 33) by the left and right frames (32, 33) contacting the body of the care receiver (M1),
**characterized in that** the holding position adjustment mechanism (34) is provided with
left and right guide rails (34a1, 34a2, 34b1, 34b2) that are fixed to the base frame (31), each extend slanted down from the left and right ends of the base frame (31), and respectively guide the left and right frames (32, 33), and
left and right sliders (34c1, 34c2, 34d1, 34d2) that are respectively guided by the left and right guide rails (34a1, 34a2, 34b1, 34b2), and respectively fixed to an inside end of the left and right frames (32, 33).

2. The holding tool (23) according to claim 1 further provided with
left and right biasing devices (35, 36) that are configured to respectively bias the left and right frames (32, 33) against a respective pushing force pushing the left and right frames (32, 33) towards the center section of the base frame (31), and
left and right ratchet mechanisms (37, 38) that control the movement direction of the left and right frames (32, 33) only in the direction of the center section of the base frame (31), and respectively fix the left and right frames (32, 33) in a releasable manner at the holding position when left and right frames (32, 33) have been positioned at the holding position.

3. A care robot (20) provided with the holding tool (23) according to claim 1 or 2.

## Patentansprüche

1. Haltemittel (23), das konfiguriert ist, den Körper eines Pflegebedürftigen (M1) zu halten, wobei das Haltemittel (23) umfasst:
einen Basisrahmen (31);
linke und rechte Rahmen (32, 33), die an linken und rechten Abschnitten des Basisrahmens (31) angebracht sind, um in linke und rechte Richtungen relativ bewegbar zu sein, und die so bereitgestellt sind, dass sie sich nach vorne zeigend erstrecken, und die konfiguriert sind, den Körper des Pflegebedürftigen (M1) zu stützen, indem der Körper von links und rechts eingezwängt wird; und
einen Haltepositions-Anpassungsmechanismus (34), der, wenn das Körpergewicht des Pflegebedürftigen (M1) nach unten auf die linken und rechten Rahmen (32, 33) aufgebracht wird, konfiguriert ist, die Halteposition der linken und rechten Rahmen (32, 33) anzupassen, indem jeder von den linken und rechten Rahmen (32, 33), die durch das Gewicht des Pflegebedürftigen (M1) nach unten gedrückt werden, in Richtung eines Mittelabschnitts des Basisrahmens (32) bewegt wird und die linken und rechten Rahmen (32, 33) positioniert werden, indem die linken und rechten Rahmen (32, 33) den Körper des Pflegebedürftigen (M 1) berühren,
**dadurch gekennzeichnet, dass** der Haltepositions-Anpassungsmechanismus (34) bereitgestellt ist mit
linken und rechten Führungsschienen (34a1, 34a2, 34b1, 34b2), die an dem Basisrahmen (31) befestigt sind, sich jeweils nach unten geneigt von den linken und rechten Enden des Basisrahmens (31) erstrecken, und die linken und rechten Rahmen (32, 33) jeweils führen, und
linke und rechte Gleitstücke (34c1, 34c2, 34d1, 34d2), die jeweils von den linken und rechten Führungsschienen (34a1, 34a2, 34b1, 34b2) geführt werden, und jeweils an einem Innenseitigen Ende der linken und rechten Rahmen (32, 33) befestigt sind.

2. Das Haltemittel (32) nach Anspruch 1, ferner bereitgestellt mit
linken und rechten vorspannenden Vorrichtungen (35, 36), die konfiguriert sind, die linken und rechten Rahmen (32, 33 jeweils gegen eine jeweilige Druckkraft vorzuspannen, die die linken und rechten Rahmen (32, 33) in Richtung des Mittelabschnitts des Basisrahmens (31) drückt, und
linke und rechte Ratschenmechanismen (37, 38), die die Bewegungsrichtung der linken und rechten Rahmen (32, 33) nur in die Richtung des Mittelabschnitts des Basisrahmens (31) steuern, und die linken und rechten Rahmen (32, 33) auf eine lösbare Weise an der Halteposition fixieren, wenn linke und rechte Rahmen (32, 33) an der Halteposition positioniert worden sind.

3. Pflegeroboter (20), der mit dem Haltemittel (23) nach Anspruch 1 oder 2 ausgestattet ist.

## Revendications

1. Outil de maintien (23) qui est conçu pour maintenir le corps d'un bénéficiaire de soin (M1), l'outil de maintien (23) comprenant :
un cadre de base (31) ;
des cadres gauche et droit (32, 33), qui sont fixés aux sections gauche et droite du cadre de base (31) afin d'être relativement mobiles dans les sens gauche et droit, et qui sont disposés pour s'étendre en faisant face vers l'avant, et qui sont conçus pour supporter le corps du bénéficiaire de soin (M1) par prise en sandwich du corps depuis la gauche et la droite ; et
un mécanisme d'ajustement de position de maintien (34) qui, lorsque le poids du corps du bénéficiaire de soin (M1) est appliqué vers le bas sur les cadres gauche et droit (32, 33), est conçu pour ajuster la position de maintien des cadres gauche et droit (32, 33) en déplaçant chacun des cadres gauche et droit (32, 33) qui ont été poussés vers le bas par le poids du bénéficiaire de soin (M1) vers une section centrale du cadre de base (31) et le positionnement des cadres gauche et droit (32, 33) par les cadres gauche et droit (32, 33) entrant en contact avec le corps du bénéficiaire de soin (M1),
**caractérisé en ce que** le mécanisme d'ajustement de position de maintien (34) est pourvu de rails de guidage gauche et droit (34a1, 34a2, 34b1, 34b2) qui sont fixés au cadre de base (31), chacun incliné en extension vers le bas depuis les extrémités gauche et droite du cadre de base (31), et guidant respectivement les cadres gauche et droit (32, 33), et
des éléments coulissants gauche et droit (34c1, 34c2, 34d1, 34d2) qui sont respectivement guidés par les rails de guidage gauche et droit (34a1, 34a2, 34b1, 34b2), et respectivement fixés à une extrémité intérieure des cadres gauche et droit (32, 33).

2. Outil de maintien (23) selon la revendication 1 pourvu en outre de dispositifs de sollicitation gauche et droit (35, 36) qui sont conçus pour solliciter respectivement les cadres gauche et droit (32, 33) contre une force de poussée respective poussant les cadres gauche et droit (32, 33) vers la section centrale du cadre de base (31), et
des mécanismes à cliquet gauche et droit (37, 38) qui commandent le sens de mouvement des cadres gauche et droit (32, 33) uniquement dans le sens de la section centrale du cadre de base (31), et fixent respectivement les cadres gauche et droit (32, 33) de manière à pouvoir être libérés au niveau de la position de maintien lorsque les cadres gauche et droit (32, 33) ont été positionnés au niveau de la position de maintien.

3. Robot de soin (20) pourvu de l'outil de maintien (23) selon la revendication 1 ou 2.
